# EUROPÄISCHE PATENTSCHRIFT

(11) **EP 1 601 305 B1**
(45) Veröffentlichungstag und Bekanntmachung des Hinweises auf die Patenterteilung: **02.09.2015**
(21) Anmeldenummer: 04766153.3
(22) Anmeldetag: 07.07.2004
(51) Int. Cl.: A61C 13/00, G05B 19/4065

(54) **ROHLING UND MEHRERE WERKZEUGE ZUR HERSTELLUNG ZAHNTECHNISCHER FORMTEILE UND VERFAHREN ZUR HERSTELLUNG DES FORMTEILS**
BLANK AND MULTIPLE INSTRUMENTS FOR PRODUCING DENTAL SHAPED PARTS AND METHOD FOR PRODUCING THE SHAPED PART
EBAUCHE ET PLUSIEURS OUTILLAGES POUR PRODUIRE DES PIECES FAÇONNÉES DENTAIRE ET PROCÉDÉ DE PRODUCTION D'UNE PIECE FAÇONNÉE CORRESPONDANTE

(30) Priorität: 07.07.2003 DE 10330758
(43) Veröffentlichungstag der Anmeldung: 07.12.2005
(73) Patentinhaber: Sirona Dental Systems GmbH, 64625 Bensheim (DE)
(72) Erfinder: BASLER, Franz, 69514 Laudenbach (DE); FORNOFF, Peter, 64385 Reichelsheim (DE)
(74) Vertreter: Sommer, Peter
(86) Internationale Anmeldenummer: PCT/EP2004/051398
(87) Internationale Veröffentlichungsnummer: WO 2005/002463

(56) Entgegenhaltungen:
- EP-A- 0 455 854
- WO-A-01/35854
- WO-A-99/13796

## Beschreibung

### Technisches Gebiet

Die Erfindung betrifft einen Rohling und mehrere Werkzeuge gemäß des Oberbegriffs des Anspruchs 1, die zur Herstellung zahntechnischer Formteile durch Bearbeitung des Rohlings dienen, sowie ein Verfahren zur Herstellung des Formteils.

### Stand der Technik

Aus der EP 0 160 797 ist ein Rohling zur Herstellung zahntechnischer Formteile bekannt, wobei der Rohling in einen Halter und einen Rohlingskörper aus unterschiedlichen Materialien aufgeteilt ist. An dem Halter kann eine Referenzfläche so ausgebildet sein, dass Steuerinformationen für die Bearbeitung abgeleitet werden können, die von den Rohlingseigenschaften abhängen.

Aus der DE 196 12 699 ist ein weiterer Rohling zur Herstellung zahntechnischer Formteile bekannt. Auch hier ist eine Typerkennung des Rohlings durch eine geometrische Gestaltung der Außenkontur des Rohlings offenbart.

Aus der EP 0 455 854 ist ein Rohling bekannt, aus dem zum einen der dem Patienten zu verabreichende Passkörper und zum anderen ein zusätzlicher Halte- oder Stützkörper herausgearbeitet werden kann. In den Passkörper wird dabei eine Ausnehmung eingearbeitet, die so ausgebildet ist, dass sie auf den Halte- oder Stützkörper aufsetzbar ist.

Aus der WO 01/35854A1 ist ein Rohling bekannt, der eine Referenzfläche aufweist, mittels derer eine Länge eines Werkzeugs einer Bearbeitungsmaschine bestimmt und ein Werkzeugsverschleiß ausgeglichen werden kann, Der Rohling weist auch eine Ausnehmung am Rohlingsköper auf, um eine fehlerhafte Positionierung in einem Magazin zu verhindern.

Die Lage der dem Verschleiß unterworfenen Werkzeuge zur Bearbeitung des Rohlings wird dadurch justiert, dass die Werkzeuge an definierte Referenzflächen des Rohlings herangefahren werden. Diese Referenzflächen können sich wie in der EP 0 160 797 gezeigt am Halter befinden oder können sich, wie in der DE 196 12 699 gezeigt, am Rohlingskörper oder an einem eigenen Referenzkörper befinden, der am Rohling an mehr oder weniger beliebiger Stellen angebracht wird.

Die im Stand der Technik vorgesehenen Referenzflächen sind lediglich zu Justagezwecken des Werkzeugs im Bezug auf den Rohling bzw. zur Ermittlung des Werkzeugsverschleißes geeignet.

Die Aufgabe der Erfindung besteht darin, eine zuverlässige Überprüfung oder Erkennung der Werkzeugbestückung und/oder des Typs des eingesetzten Werkzeugs einer Bearbeitungsmaschine für den Rohling zu ermöglichen. Bei Schleifmaschinen mit gleichzeitig im Einsatz befindlichen unterschiedlichen Typen von Werkzeugen sollen Fehlbestückungen erkannt werden.

### Darstellung der Erfindung

Diese Aufgabe wird erfindungsgemäß durch die Merkmale in den kennzeichnenden Teilen der unabhängigen Ansprüche gelöst, wobei zweckmäßige Weiterbildungen durch die jeweiligen Unteransprüche gekennzeichnet sind.

Der Vorteil eines Rohlings und mehrerer Werkzeuge zur Herstellung zahntechnischer Formteile, umfassend einen Rohlingskörper aus Zahnrestaurationsmaterial, aus dem wiederum mittels der mehreren Werkzeuge das Formteil durch Materialabtragung herausarbeitbar ist, wobei der Rohling mindestens eine Lehre aufweist, die in ihrer Geometrie so ausgebildet ist, dass das für die Bearbeitung vorhandene Werkzeug anhand seiner Außenkontur mittels der mindestens einen Lehre erkennbar ist, besteht darin, dass hierdurch die Bearbeitung mit einem vorgesehenen, besonders geeigneten Werkzeug sichergestellt werden kann. Hierbei spielt es keine Rolle, ob der Rohling aus Keramik, Metall, Kunststoff oder einem sonstigen formstabilen Material besteht. Insbesondere bei Schleifmaschinen mit gleichzeitig im Einsatz befindlichen unterschiedlichen Typen von Werkzeugen können so Fehlbestückungen erkannt werden. Als Bearbeitungsverfahren kommen beispielsweise Schleifen oder Fräsen in Betracht.

Die Lehre kann einer idealen Außenkontur eines ersten Werkzeugs zugeordnet sein, da auf diesem Wege das zur Lehre korrespondierende Werkzeug erkennbar ist. Darüber hinaus kann anhand der selben Lehre ein weiteres Werkzeug mit einer anderen idealen Außenkontur als vom ersten Werkzeug unterscheidbar erkennbar sein. Auf diesem Weg kann nicht nur das zur Lehre korrespondierende Werkzeug ausgewählt werden, sondern darüber hinaus können unterschiedliche Werkzeuge unterschieden werden.

Die Gestalt einer solchen Lehre ist Ausnehmung, in die die ideale Außenkontur des ersten Werkzeugs eingreift. Ein solcher Eingriff kann beispielsweise eine auf die Ausnehmung und das Werkzeug ausgelegte Passung sein.

Gemäß einer ersten Erfindung weist die Lehre eine Ausnehmung auf, die einer der idealen Außenkontur eines ersten zylinderförmigen Werkzeugs eines ersten Durchmessers d1 entspricht, wobei deren Durchmesser kleiner ist als die ideale Außenkontur eines zweiten zylinderförmigen Werkzeugs mit einem zweiten Durchmesser d2. Auf diesem Wege können mindestens zwei Werkzeuge von gleicher Geometrie aber unterschiedlichen Abmaßen voneinander unterschieden werden.

Gemäß einer weiteren Erfindung ist eine der idealen Außenkontur eines ersten, sich verjüngenden Werkzeugs entsprechende sich ebenfalls verjüngende Ausnehmung vorgesehen, wobei sich die Ausnehmung auf einen Durchmesser verjüngt, der kleiner ist als der kleinste Durchmesser der idealen Außenkontur eines zweiten zylindrischen Werkzeugs. Auf diesem Weg können auch Werkzeuge unterschiedlicher Geometrie voneinander unterschieden werden. Dieses Prinzip ist selbstverständlich auch auf beliebige weitere Werkzeugformen übertragbar und beispielsweise für Werkzeuge möglich, die einen Radius an deren Ende aufweisen.

Gemäß einer weiteren Erfindung dient die Lehre der Auswahl des Werkzeugs, indem sie die Negativform des zur Bearbeitung vorgesehenen Werkzeugs in dessen Idealzustand abbildet. Darüber hinaus können sie auch der Bestimmung des Verschleißzustands des Werkzeugs dienen.

Vorteilhafterweise ist die Lehre als eine Bohrung ausgebildet, da diese besonders einfach herstellbar ist.

Besonders vorteilhaft ist es, wenn die Lehre so ausgebildet ist, dass beim Anfahren des der Lehre zugeordneten Werkzeugs an die Lehre der Istzustand der Abmaße des jeweils zugeordneten Werkzeugs feststellbar ist, sodaß hieraus der Abnutzungsgrad des Werkzeugs beurteilt und z.B. eine bestimmte Mindestwerkzeugqualität vorgegeben werden kann. Ein weiterer Vorteil ist, so eine zuverlässige Überprüfung oder Erkennung der Werkzeugbestückung bzw. des Typs und Abnutzungszustands des eingesetzten Werkzeugs einer Bearbeitungsmaschine für den Rohling zu ermöglichen.

Ein weiterer Vorteil ergibt sich, wenn der Rohling einen Halteansatz zur Halterung und/oder Positionierung des Rohlingskörpers in einer Bearbeitungsvorrichtung umfasst und wenn die Lehre an dem Halteansatz angebracht ist, da hierdurch die Funktion der Lehre während des gesamten Bearbeitungsvorgangs erhalten bleibt und die korrespondierenden Werkzeuge immer wieder überprüft werden können. Werden auf diese Weise Werkzeuge von schlechter Qualität, sowie Fehlbestückungen erkannt, kann beispielsweise ein Werkzeugbruch während der Bearbeitung verhindert werden.

Alternativ kann mindestens eine Lehre am Halteansatz oder dem Rohlingskörper oder an einem Referenzteil angebracht werden, wodurch fertigungstechnische Besonderheiten berücksichtigt werden können. Darüber hinaus können auch jeweils mindestens eine Lehre an mindestens zwei der bezeichneten Stellen angebracht werden.

Wenn die Lehre als Universallehre für einzusetzende Werkzeuge ausgebildet ist, können vorteilhafterweise mit einer einzigen Lehre diverse Werkzeuggeometrien überprüft werden. Als Universallehre wird im vorliegenden Fall eine Lehre bezeichnet, mit deren Hilfe die geometrische Gestalt mehrerer Werkzeuge mit Hilfe einer einzigen Lehre überprüft werden kann. Dies erfordert, dass sich die Formgeometrie selbst aus mehreren einzelnen Formgeometrien zusammensetzt, von welchen eine jede mit der Werkzeuggeometrie des ihr entsprechenden Werkzeugs korrespondiert. Hierdurch kann nicht nur eine umfangreichere Werkzeugbestückung mit Hilfe einer einzigen Lehre überprüft werden, sondern es kann auch der Abnutzungsgrad einer Vielzahl und ggf. sogar aller Werkzeuge mit Hilfe nur einer einzigen Lehre überprüft werden. Hierdurch können Fehlbestückungen bei einem besonders geringen Aufwand erkannt werden. Statt einer Universallehre können auch mehrere Universallehren gleicher oder unterschiedlicher geometrischer Gestalt Verwendung finden, beispielsweise wenn fertigungstechnische oder steuerungstechnische Gründe dies nahe legen, um z.B. ein schnelleres Anfahren des Werkzeugs an den Rohling zu ermöglichen.

Gemäß einer Weiterbildung sind mehrere Lehren zur Charakterisierung eines einzigen Werkzeugs angebracht, wodurch dieses einzige Werkzeug hinsichtlich mehr als nur einem Parameter auf seinen Zustand hin und insbesondere auf seine Abweichung von einem idealen Zustand hin überprüft werden kann.

Der Vorteil eines Verfahrens zur Herstellung zahntechnischer Formteile mit einem Rohlingskörper aus Zahnrestaurationsmaterial, aus welchem das gesamte Formteil in einer Bearbeitungsvorrichtung durch Materialabtragung mittels mehrerer Werkzeuge mit unterschiedlichen Außenkonturen herausarbeitbar ist und das für die Bearbeitung ausgewählte Werkzeug vor dessen Einsatz mit Hilfe mindestens einer am Rohling angebrachten Lehre auf seine Außenkontur hin überprüft wird, ist, dass auf diesem Wege sichergestellt werden kann, dass immer die für die Bearbeitung vorgesehenen Werkzeuge zum Einsatz kommen. Dabei wird aus der Eindringtiefe des Werkzeugs die ideale Außenkontur des Werkzeugs bestimmt und der Typ des Werkzeugs festgelegt.

Es ist auch möglich, dass das der Lehre zugeordnete Werkzeug an die Lehre angefahren wird und der Istzustand der Abmaße des zugeordneten Werkzeugs festgestellt wird, da auf diesem Wege jedesmal Informationen über den augenblicklich herrschenden Werkzeugzustand ermittelt werden können, wenn die Lehre/n angefahren wird. Dies kann auch mehrmals während einer Bearbeitungssequenz geschehen. So lässt sich der optimale Zustand und damit eine hohe Qualität des Formkörpers sicherstellen.

Weiterhin ist es auch möglich, den Grad der Abweichung des Ist-Zustands des Werkzeugs von der idealen Außenkontur des Werkzeugs zu bestimmen und diese Abweichung in die Steuerung der Bearbeitung des Rohlings einfließen zu lassen. Hierfür kann beispielsweise ein Parameter gebildet werden. In einem solchen Fall kann ein Werkzeug, dessen ungeeigneter Zustand erkannt wurde, aus dem Bearbeitungsprozess ausgeschlossen werden und neue oder andere Werkzeuge in einem besseren Zustand können diese Aufgabe mit übernehmen. Es ist auch denkbar, die Rüstzeiten dadurch zu verringern, dass erst dann ein Werkzeugwechsel vorgeschlagen wird, wenn der Bearbeitungsprozess auch mit keinem anderem der noch im Prozess befindlichen Werkzeuge mehr zu Ende gebracht werden kann. Die sich aus dem Vergleich ergebenden Informationen können somit zur werkzeugzustandsspezifischen Steuerung des Bearbeitungsprozesses verwendet werden.

Insgesamt ist hervorzuheben, dass die Lehren an beliebiger Stelle angebracht werden können. Die genaue Lage der Lehre ist jedoch innerhalb der Bearbeitungsvorrichtung bekannt oder wird von dieser bestimmt.

Darüber hinaus kann die Lehre so ausgebildet sein, dass die Erkennung von dem Material angepassten Werkzeugen möglich ist.

Dies kann beispielsweise über die Geometrie oder über einen bestimmten Bearbeitungswiderstand bei der Benutzung des Werkzeugs in der bekannten Geometrie der Lehre mit einem bekannten Bearbeitungsaufwand erfolgen.

### Kurzbeschreibung der Zeichnung

Das erfindungsgemäße Verfahren wird anhand der Zeichnung erläutert. Es zeigt die:
- Fig. 1a: einen ersten Rohling zur Herstellung zahntechnischer Formteile mit einer Lehre an einem Halter eines Rohlingskörpers in perspektivischer Darstellung, die
- Fig. 1b: eine weitere Ausführungsform eines erfindungsgemäßen Rohlings mit einer Lehre am Rohlingskörper in perspektivischer Darstellung, die
- Fig. 1c: einen weiteren Rohling mit mindestens einer Lehre an einer am Rohling angebrachten Referenzfläche in perspektivischer Darstellung, die
- Fig. 2a: den Rohling aus Fig. 1a im Längsschnitt, die
- Fig. 2b: den Rohling aus Fig. 1b im Längsschnitt, die
- Fig. 2c: den Rohling aus Fig. 1c im Längsschnitt, die
- Fig. 3a: ein Bearbeitungswerkzeug in Form eines diamantbeschichteten Schleifers mit Zylinderform mit einem ersten Durchmesser, die
- Fig. 3b: ein Bearbeitungswerkzeug in Form eines diamantbeschichteten Schleifers mit Zylinderform mit einem zweiten Durchmesser, die
- Fig. 3c: ein Bearbeitungswerkzeug in Form eines diamantbeschichteten Schleifers mit einer spitz zulaufenden Kegelspitze, die
- Fig. 3d: ein Bearbeitungswerkzeug in Form eines diamantbeschichteten Schleifers mit einer Verjüngung und einer abgerundeten Kegelspitze, die
- Fig. 3e: ein Bearbeitungswerkzeug, in Form einer diamantbeschichtete Schleifscheibe, die
- Fig. 4a: eine Lehre, mittels welcher das Bearbeitungswerkzeug gemäß Fig. 3a überprüft wird, die
- Fig. 4b: die Lehre aus 4a, mittels welcher das Bearbeitungswerkzeug gemäß Fig. 3b überprüft wird, die
- Fig. 4c: eine Lehre, mittels welcher das Bearbeitungswerkzeug gemäß Fig. 3c überprüft wird, die
- Fig. 4d: eine Lehre, mittels welcher das Bearbeitungswerkzeug gemäß Fig. 3d überprüft wird, die
- Fig. 4e: eine Lehre, mittels welcher das Bearbeitungswerkzeug gemäß Fig. 3e überprüft wird, die
- Fig. 4f: eine Lehre, mittels welcher die Abnutzung des Bearbeitungswerkzeugs gemäß Fig. 3c überprüft wird, die
- Fig. 5: eine Lehre, welche als Universallehre ausgebildet ist zur Überprüfung mehrerer Werkzeuge mit unterschiedlichen Konturen, die
- Fig. 6: eine weitere Gestalt einer als Universallehre geeigneten Lehre und die
- Fig. 7a,b: die Verschleißmessung eines Zylinderschleifers bzw. eines Kegelschleifers.

### Ausführungsbeispiel

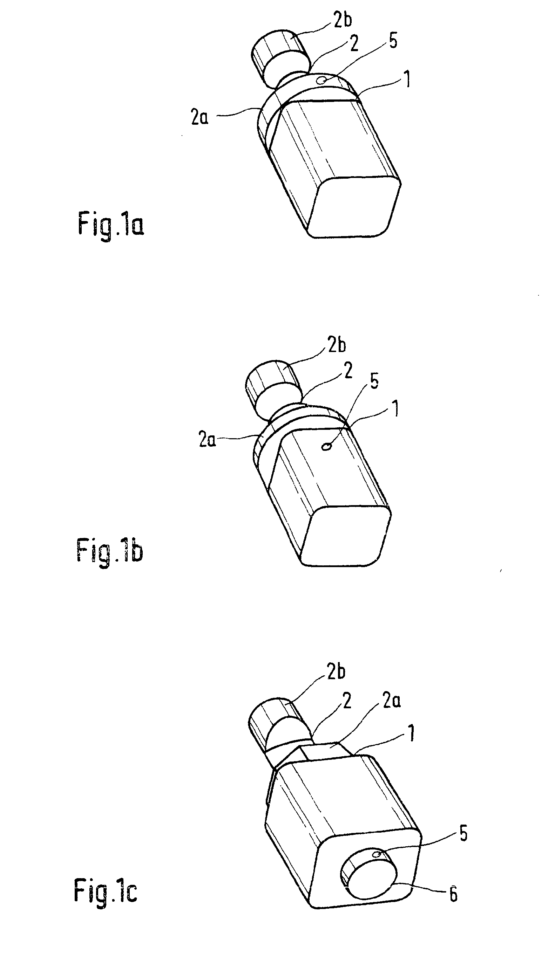

Der Rohling aus Fig. 1a umfasst einen Rohlingskörper 1, der aus einem in der Zahntechnik üblichen Material, z.B. Keramikmaterial, besteht, aber auch aus einem anderen beliebigen formstabilen Material wie Metall oder Kunststoff bestehen kann und aus dem durch Materialabtragung das Formteil gefertigt werden wird. Der Rohlingskörper 1 ist in seinem Querschnitt zweckmäßigerweise kreis- oder rechteckförmig. An einem stirnseitigen Ende des Rohlingskörpers 1 schließt sich in bekannter Weise ein Halter 2 an, dessen Form zylindrisch ist.

Der Halter 2 kann aus einem identischen oder einem anderen Material wie der Rohlingskörper 1 bestehen, wobei im Falle unterschiedlichen Materials der Rohlingskörper 1 auf dem Halter 2 zu befestigen ist, beispielsweise durch Kleben. Der Halteansatz 2 weist hierfür im vorliegenden Beispiel einen kreiszylindrischen Flansch 2a mit einem Durchmesser auf, die hinreichend ist, um eine sichere Befestigung am Rohlingskörper 1 zu ermöglichen, und einen Aufnahmeschaft 2b zur Befestigung in der Bearbeitungsvorrichtung. Der Aufnahmeschaft 2b ist so bemessen, dass er in eine vorbestimmte Aufnahme der Bearbeitungsmaschine passt.

In den Fig. 1a-c ist eine Vertiefung 5 mit Lehrencharakter, angebracht. Derartige Vertiefungen können einzeln, oder in noch größerer Zahl an verschiedenen Stellen des Rohling angebracht werden. Diese Vertiefungen dienen aufgrund ihres Lehrencharakters der Auswahl und der Beurteilung der einzelnen Werkzeuge, indem mit Hilfe der Vertiefungen 5 spezifische Daten des Werkzeugs, wie z.B. Abmaße, Verschleiß und Lagenbestimmung ermittelt werden.

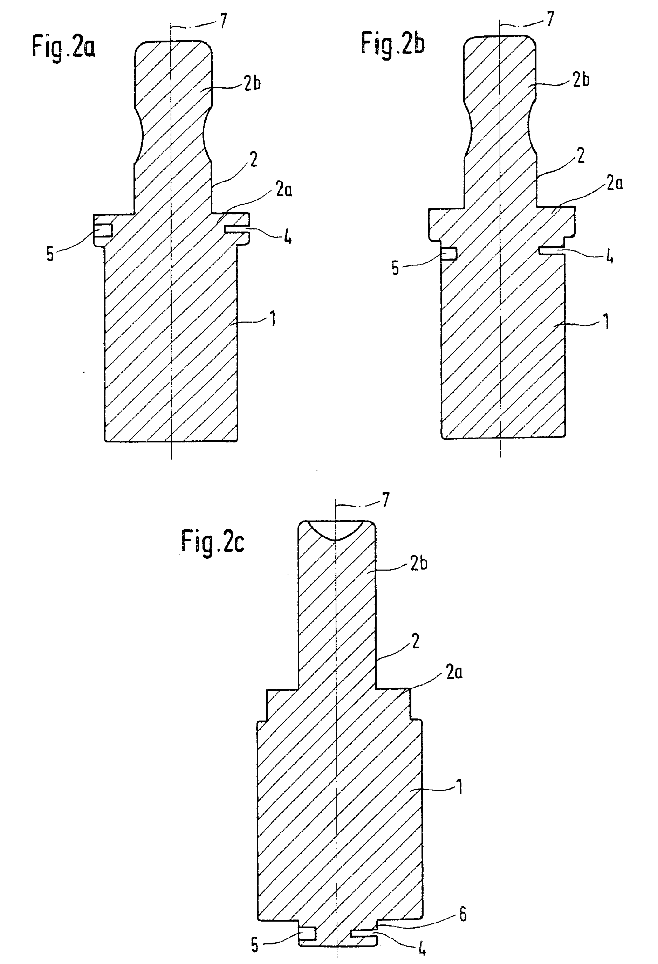

Der in den Fig. 2a-c dargestellte Rohling ist jeweils vergleichbar mit dem Rohling aus den Fig. 1a-c aufgebaut. In der Darstellung in Fig. 2a sind an den Rohling zwei Lehren 4,5 in Form von Vertiefungen mit Lehrencharakter am Flansch 2a des Halters 2 angebracht. Im vorliegenden Fall haben die Lehren eine Nut- und Bohrungsform 4,5. In Fig. 2b wird ein Rohling gezeigt, der zwei Lehren 4,5 am Rohlingskörper 1 aufweist. Der Rohling aus Fig. 2c ist ebenfalls vergleichbar dem Rohling aus Fig. 1c aufgebaut und umfasst ein Passteil 6, das im vorliegenden Fall auf dem Rohlingskörper 1 gegenüber dem Halter 2 angebracht ist. Das Passteil 6 kann aus demselben Material wie der Rohlingskörper sein und kann auf der Achse 7 des Halters liegen und kann selbst zur Größen- und Lagenbestimmung des Bearbeitungswerkzeuges dienen. Alternativ sind auch beliebige andere Lagen des Passteils 6 denkbar, so lange es dem Bearbeitungsprozess nicht hinderlich ist. Es kann darüber hinaus die dargestellte zylindrische Form haben oder eine andere. Auf dem Passteil 6 sind zwei Lehren 4,5 in Form von Vertiefungen angebracht, die hier dargestellt die Form einer Nut 4 und Bohrung 5 aufweisen.

Wesentlich bei allen Rohlingen ist, dass die Lage der Lehre 4,5 in der Bearbeitungseinrichtung bekannt oder zumindest eindeutig feststellbar ist. Dies kann beispielsweise durch Vermessung geschehen.

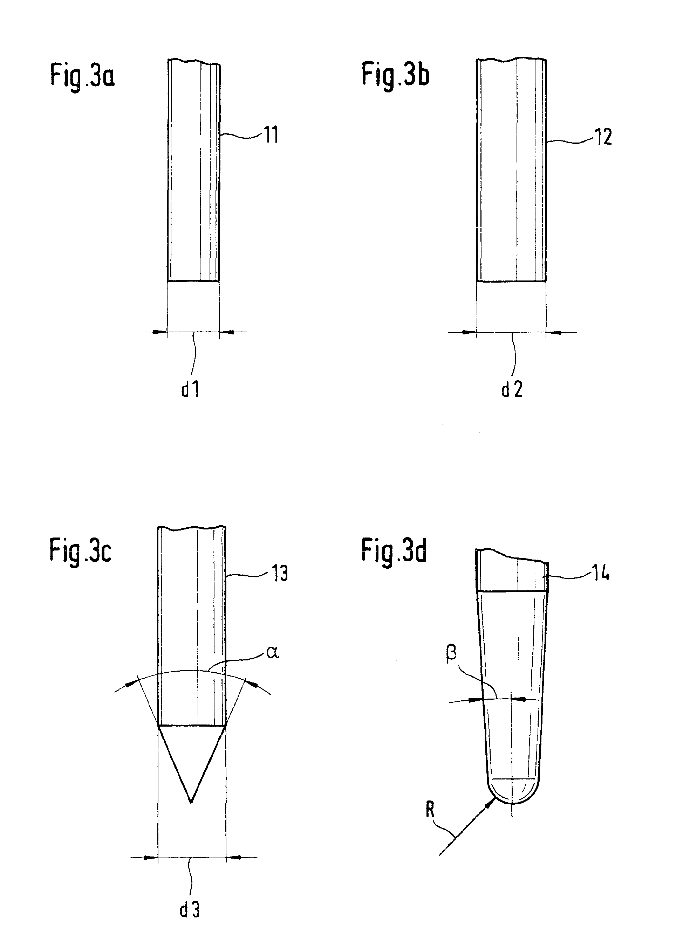

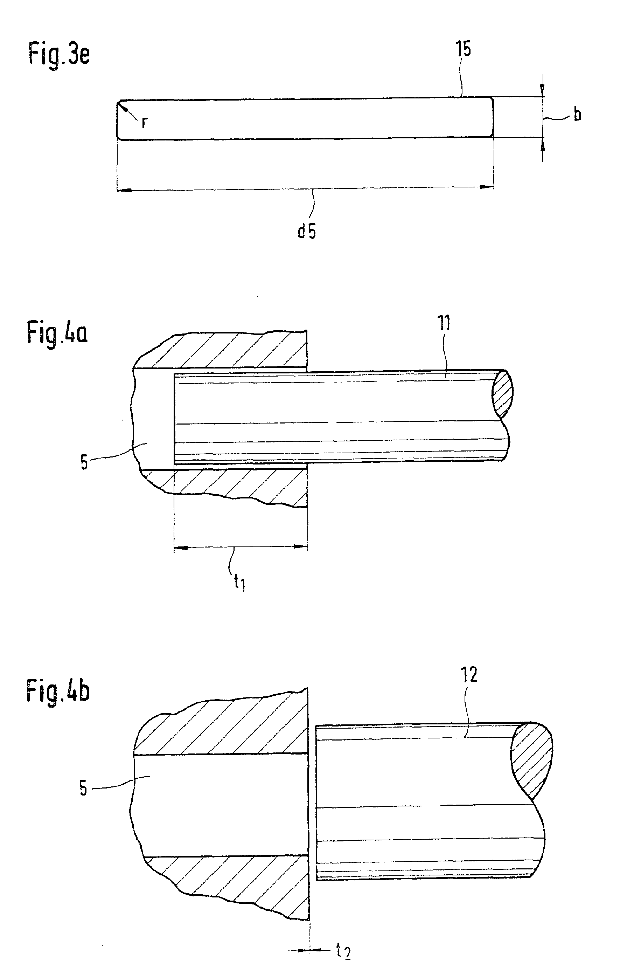

Fig. 3 zeigt Bearbeitungswerkzeuge, wie sie zur Bearbeitung des Rohlingskörpers 1 Verwendung finden. Die Fig. 3a und 3b zeigen einen diamantbeschichteten zylindrischen Schleifer oder Fräser, wobei der Schleifer 11 aus Fig. 3a einen ersten Durchmesser d1 und der Schleifer 12 aus Fig. 3b einen zweiten Durchmesser d2 aufweist. Derart gestaltete Schleifer dienen in erster Linie zum Bearbeiten von Innenvolumina mit senkrechten Wänden.

Die Figuren 3c und 3d zeigen jeweils einen sich zur Spitze hin verjüngenden diamantbeschichteten Schleifer 13, 14. In Fig. 3c weist das Ende des Schleifers 13 einen Winkel α=45° auf. In Fig. 3d verläuft das Ende des Schleifers 14 konisch und schließt am äußersten Ende mit einer Rundung mit dem Radius R ab. Derart gestaltete Schleifer dienen in erster Linie zum Bearbeiten von Okklusionsflächen mit Fissuren, aber auch für Innenvolumen mit nicht senkrechten Wänden.

Die Fig. 3e zeigt eine diamantbeschichtete Schleifscheibe 15, die sowohl zum Abtrennen und Schruppen als auch zur Bearbeitung auf Endmaß eingesetzt wird. Die Kanten der Schleifscheibe weisen einen Radius der einen Durchmesser d5 und eine Breite b auf.

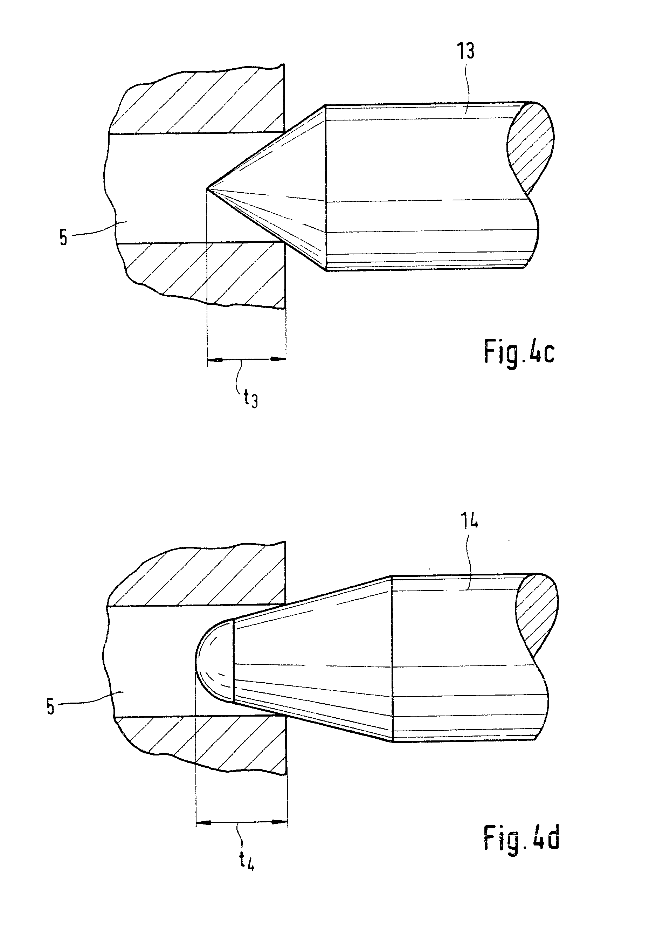

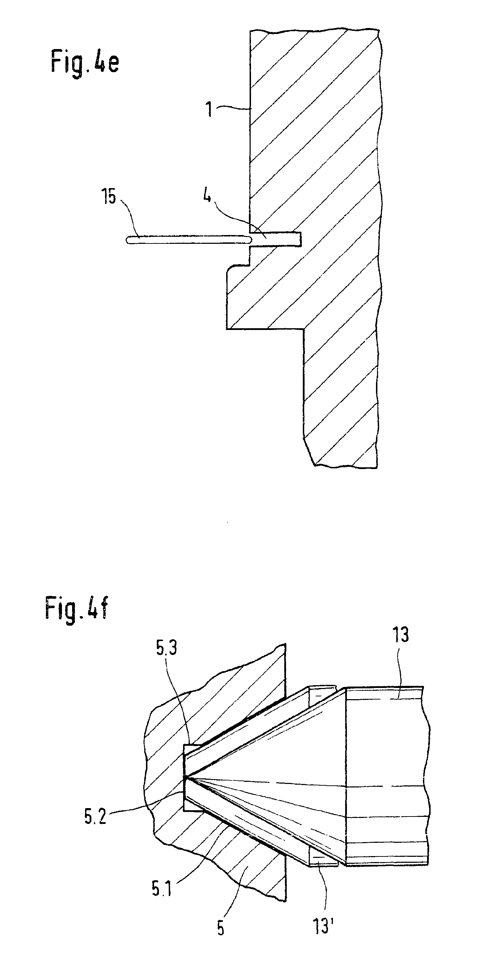

Fig. 4 zeigt die Bearbeitungswerkzeuge aus Fig. 3 im Eingriff mit einer Lehre. Die Fig. 4a und 4b zeigen einen diamantbeschichteten zylindrischen Schleifer 11, 12, wobei der Schleifer 11 um den Betrag t1 in die als Bohrung gestaltete Lehre 5 eindringt und wobei der Schleifer 12 aufgrund seines größeren Durchmessers nicht in der Lage ist, in die Lehre 5 einzudringen. Die Eindringtiefe t2 ist hier gleich Null, woraus sich bestimmen lässt, dass das Werkzeug 12 vorliegt.

Die Fig. 4c und 4d zeigen jeweils einen sich zur Spitze hin verjüngenden diamantbeschichteten Schleifer 13, 14 beim Eindringen in die als Bohrung gestaltete Lehre 5. Aus dem in den Figuren 4c und 4d dargestellten Eindringen um den Betrag t3 in Fig. 4c und um den Betrag t4 in Fig. 4d ergeben sich neben der Feststellung der idealen Außenkontur und damit der Festlegung des Typs des Werkzeugs auch zusätzliche Informationen über den Abnutzungszustand und über die Eignung des betreffenden Werkzeugs zum Durchführen der angezielten Bearbeitung.

Die Fig. 4e zeigt eine diamantbeschichtete Schleifscheibe 15, wobei die Schleifscheibe 15 aus Fig. 3e in die als Nut 4 gestaltete Lehre im Rohlingskörper 1 einzudringen beginnt. Aus diesem Eindringmoment ergibt sich z.B. die Information, ob die Schleifscheibe zu dick und damit ungeeignet für den angezielten Schleifvorgang ist.

In Fig. 4f ist eine Lehre 5 gezeigt, die zur Verschleißerkennung der Werkzeugspitze dient. Die Lehre weist einen konischen Öffnungsbereich 5.1 auf, der in einen Bodenbereich 5.2 übergeht. Dazwischen liegt ein zylindrischer Bereich 5.3. Das neue Werkzeug 13 dringt mit seiner Kontur derart in die Lehre 5 ein, dass nur die Spitze den Boden 5.2 berührt. Ist die Spitze wie bei dem Werkzeug 13' abgenutzt, so ist die Eindringtiefe der Kontur bis zum Erreichen des Bodens 5.2. bzw. bis zur Anlage an die Seitenwände der Öffnung 5.1 größer als beim neuen Werkzeug 13. Aus diesem Maß kann daher auf den Verschleiß geschlossen werden.

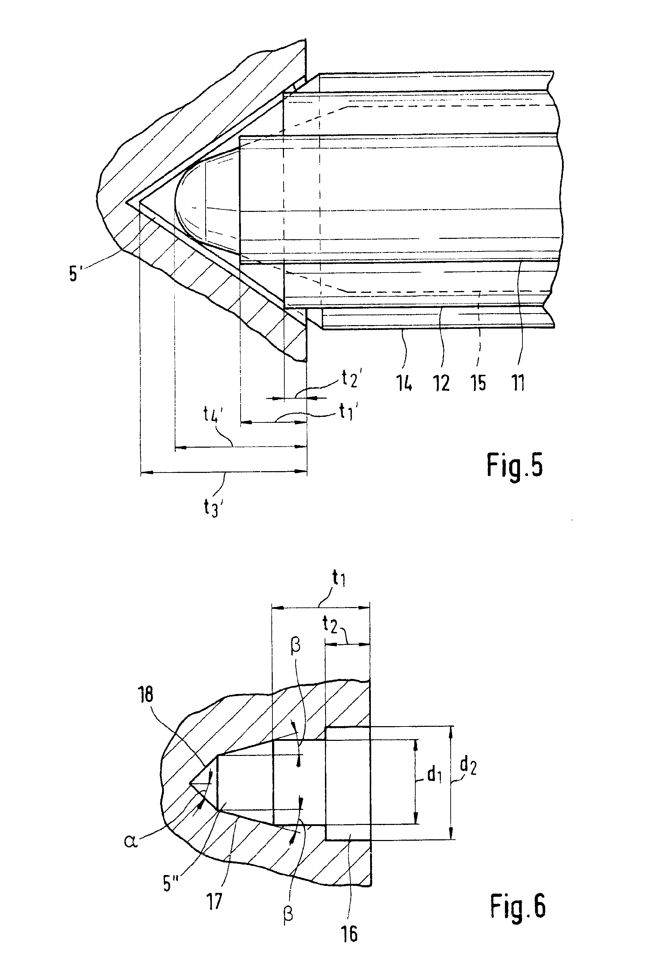

Fig. 5 zeigt eine einzige als Universallehre gestaltete zylindrische Aussparung 5' für die in Fig. 3a-3d dargestellten Werkzeuge 11-14. Aus der jeweiligen tatsächlichen Eindringtiefe t1', t2', t3', t4' ergeben sich Informationen über den Zustand des jeweiligen Werkzeugs und damit über die Geeignetheit des Werkzeugs für die angezielte Bearbeitung.

Fig. 6 zeigt eine weitere einzige als Universallehre gestaltete Aussparung 5''. Diese Aussparung umfasst eine Bohrung 16 mit dem Durchmesser d2 und der zugegehörigen möglichen Eindringtiefe t2 und eine mit dem Durchmesser d1 und der zugehörigen möglichen Eindringtiefe t1. Darüber hinaus weist die Aussparung eine Abschrägung 17 um den Winkel β und eine weitere Abschrägung 18 um den Winkel α zur Prüfung korrespondierender Werkzeuge auf. Alternativ kann statt eines oder mehrerer Winkel auch eine oder mehrere Rundungen mit dem zu den entsprechend korrespondierenden Werkzeugen passenden Radien R (vgl. Bild 3d) vorgesehen sein. Aus der jeweiligen tatsächlichen Eindringtiefe ergibt sich die Information über den Zustand des jeweiligen Werkzeugs und damit über die Eignung des Werkzeugs für die angestrebte Bearbeitung.

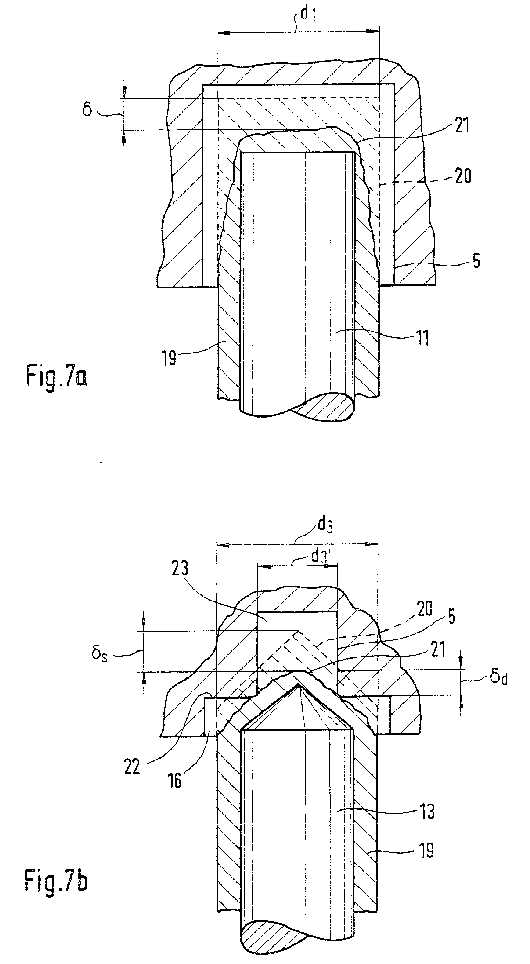

In den Fig. 7a,b ist gezeigt, auf welche Art und Weise eine Verschleißmessung vorgenommen werden kann. Das Werkzeug 11 ist mit einer Beschichtung 19 versehen, in welcher die eigentlichen Schneidkanten vorgesehen sind, beispielsweise eine Diamantbeschichtung eines Schleifstiftes. Diese Beschichtung 19 weist eine ideale Außenkontur 20 auf, die durch die gestrichelte Linien angedeutet ist. Aufgrund des während der Bearbeitung auftretenden Verschleißes verfügt das Werkzeug 11 jedoch über eine tatsächliche Außenkontur 21, welche von der idealen Außenkontur 20 abweicht.

Im Bereich der stirnseitigen Bearbeitungsfläche ist zwischen der idealen Außenkontur 20 und der tatsächlichen Außenkontur 21 ein Verschleiß der Beschichtung 19 um einen Betrag α festzustellen, der bei einer ursprünglichen Beschichtungsdicke von 50 bis 60 µm durchaus 40 bis 50 µm betragen kann. Durch Messung der Eindringtiefe des Werkzeuges 11 in die Lehre 5 lässt sich der Verschleiß der vorderen Bearbeitungsfläche feststellen.

In Fig. 7b ist eine Lehre 5 dargestellt, wie sie zur Verschleißmessung eines beschichteten Kegelschleifers verwendet werden kann. Der Kegelschleifer trägt eine Beschichtung 19, welche wiederum über eine ideale und eine tatsächliche Außenkontur 20, 21 verfügt. Dank der Bohrung 16 wird zunächst der Durchmesser des verwendeten Werkzeuges 13 erkannt und aufgrund einer Anschlagfläche 22 mit einer zentralen Bohrung 23 wird der Verschleiß α_{d} des Kegelmantels bestimmt. Der Verschleiß αₛ der Kegelspitze lässt sich gemäß Fig. 7a ermitteln, kann jedoch bei vorliegen gewisser Erfahrungswerte auch aus einer Messung gemäß Fig. 7b vorgenommen werden. Bei der Vermessung einer Kegelspitze, aber auch eines Kugelschleifers, kann für jeden Durchmesser eine eigene Lehre vorgesehen sein, wobei jeweils die Verschleißmessung über die Messung der Eindringtiefe in die Lehre erfolgt.

## Patentansprüche

1. Rohling und mehrere Werkzeuge zur Herstellung zahntechnischer Formteile, umfassend einen Rohlingskörper (1) aus Zahnrestaurationsmaterial, aus welchem mittels der mehreren Werkzeuge (11, 12, 13, 14, 15) mit unterschiedlicher Außenkontur das Formteil durch Materialabtragung herausarbeitbar ist, wobei zumindest zwei Werkzeuge (11, 12) zylinderförmig sind, **dadurch gekennzeichnet, dass** der Rohling mindestens eine Lehre (4,5) aufweist, die als Ausnehmung ausgebildet ist, in welche die ideale Außenkontur eines Werkzeugs (11, 12, 13, 14, 15) eingreift, und die in ihrer Geometrie so ausgebildet ist, dass das für die Bearbeitung ausgewählte Werkzeug (11, 12, 13, 14, 15) anhand seiner Außenkontur mittels der Lehre (4,5) erkennbar ist, wobei die Lehre (4,5) eine der idealen Außenkontur des ersten zylinderförmigen Werkzeugs (11) mit einem ersten Durchmesser (d1) entsprechende Ausnehmung (5) aufweist, deren Durchmesser kleiner ist als die ideale Außenkontur des zweiten zylinderförmigen Werkzeugs (12) mit einem zweiten Durchmesser (d2).

2. Rohling und mehrere Werkzeuge zur Herstellung zahntechnischer Formteile, umfassend einen Rohlingskörper (1) aus Zahnrestaurationsmaterial, aus welchem mittels der mehreren Werkzeuge (11, 12, 13, 14, 15) mit unterschiedlicher Außenkontur das Formteil durch Materialabtragung herausarbeitbar ist, wobei mindestens ein Werkzeug eine sich verjüngende Außenkontur hat und mindestens ein Werkzeug eine zylindrische Außenkontur hat, **dadurch gekennzeichnet, dass** der Rohling mindestens eine Lehre (4,5) aufweist, die als Ausnehmung ausgebildet ist, in welche die ideale Außenkontur eines Werkzeugs (11, 12, 13, 14, 15) eingreift, und die in ihrer Geometrie so ausgebildet ist, dass das für die Bearbeitung ausgewählte Werkzeug (11, 12, 13, 14, 15) anhand seiner Außenkontur mittels der Lehre (4,5) erkennbar ist, wobei die Lehre (4,5) eine der idealen Außenkontur des sich verjüngenden ersten Werkzeugs (13, 14) entsprechende sich verjüngende Ausnehmung aufweist und dass die Ausnehmung sich auf einen Durchmesser verjüngt, der kleiner ist als der kleinste Durchmesser (d1, d2) der idealen Außenkontur des zweiten zylindrischen Werkzeugs (11,12).

3. Rohling und mehrere Werkzeuge zur Herstellung zahntechnischer Formteile, umfassend einen Rohlingskörper (1) aus Zahnrestaurationsmaterial, aus welchem mittels mehrerer Werkzeuge (11, 12, 13, 14, 15) mit unterschiedlicher Außenkontur das Formteil durch Materialabtragung herausarbeitbar ist, **dadurch gekennzeichnet, dass** der Rohling mindestens eine Lehre (4,5) aufweist, die als Ausnehmung ausgebildet ist, in welche die ideale Außenkontur eines der Werkzeuge (11, 12, 13, 14, 15) eingreift, und die in ihrer Geometrie so ausgebildet ist, dass das für die Bearbeitung ausgewählte Werkzeug (11, 12, 13, 14, 15) anhand seiner Außenkontur mittels der Lehre (4,5) erkennbar ist, wobei die Lehre die Negativform eines der zur Bearbeitung vorgesehenen Werkzeuge in dessen Idealzustand abbildet.

4. Rohling und mehrere Werkzeuge nach Anspruch 3, **dadurch gekennzeichnet, dass** die Ausnehmung im Rohling als Bohrung (5) ausgebildet ist.

5. Rohling und mehrere Werkzeuge nach einem der Ansprüche 1 bis 4, **dadurch gekennzeichnet, dass** die Lehre (4,5) so ausgebildet ist, dass beim Anfahren des der Lehre (4,5) zugeordneten Werkzeugs (11, 12, 13, 14, 15) an die Lehre (4,5) der Istzustand der Abmaße des jeweils zugeordneten Werkzeugs (11, 12, 13, 14, 15) feststellbar ist.

6. Rohling und mehrere Werkzeuge nach einem der Ansprüche 1 bis 5, **dadurch gekennzeichnet, dass** der Rohling einen Halteansatz (2, 2a, 2b) zur Halterung und/oder Positionierung des Rohlingskörpers (1) in der Bearbeitungsvorrichtung umfasst und dass die Lehre (4,5) an dem Halteansatz angebracht ist.

7. Rohling und mehrere Werkzeuge nach einem der Ansprüche 1 bis 6, **dadurch gekennzeichnet, dass** mindestens eine Lehre (4,5) am Halteansatz (2) und/oder an dem Rohlingskörper (1) und/oder an einem Referenzteil (6) angebracht ist.

8. Rohling und mehrere Werkzeuge nach einem der Ansprüche 1 bis 7, **dadurch gekennzeichnet, dass** die Lehre (4,5) als Universallehre für einzusetzende Werkzeuge (11, 12, 13, 14, 15) ausgebildet ist.

9. Rohling und mehrere Werkzeuge nach einem der Ansprüche 1 bis 8, **dadurch gekennzeichnet, dass** mehrere Lehren (4,5) zur Bestimmung eines Werkzeugs (11, 12, 13, 14, 15) angebracht sind.

10. Rohling und mehrere Werkzeuge nach einem der Ansprüche 1 bis 9, **dadurch gekennzeichnet, dass** der Rohling und die mehreren Werkzeuge in einer Bearbeitungsmaschine angeordnet sind.

11. Verfahren zur Herstellung zahntechnischer Formteile aus einem Rohling mit einem Rohlingskörper (1) aus Zahnrestaurationsmaterial, aus welchem das gesamte Formteil in einer Bearbeitungsvorrichtung durch Materialabtragung mittels mehrerer Werkzeuge (11, 12, 13, 14, 15) mit unterschiedlichen Außenkonturen herausarbeitbar ist, wobei das für die Bearbeitung ausgewählte Werkzeug (11, 12, 13, 14, 15) vor dessen Einsatz mittels mindestens einer am Rohling angebrachten Lehre (4,5) auf seine Außenkontur hin überprüft wird, **dadurch gekennzeichnet, dass** die Lehre (4,5) als Vertiefung gestaltet ist und dass aus der Eindringtiefe des Werkzeugs die ideale Außenkontur des Werkzeugs bestimmt und der Typ des Werkzeugs festgelegt wird.

## Claims

1. Blank and several tools for making dental shapes, comprising a blank body (1) made of tooth restoration material, from which the shape can be created by material removal by means of the several tools (11, 12, 13, 14) having different external contours, at least two tools (11, 12) being cylindrical, **characterized in that** the blank has at least one guide feature (4,5), which takes the form of a recess with which the ideal external contour of a tool (11, 12, 13, 14, 15) engages, and whose geometry is such that the tool (11, 12, 13, 14, 15) selected for the machining is on the basis of its external contour recognizable by means of the guide feature (4,5), the guide feature (4,5) having a recess (5) corresponding to the ideal external contour of the first cylindrical tool (11) with a first diameter (d1), the diameter of the recess (5) being smaller than the ideal external contour of the second cylindrical tool (12) with a second diameter (d2).

2. Blank and several tools for making dental shapes, comprising a blank body (1) made of tooth restoration material, from which the shape can be created by material removal by means of the several tools (11, 12, 13, 14, 15) having different external contours, at least one tool having a tapering external contour and at least one tool having a cylindrical external contour, **characterized in that** the blank has at least one guide feature (4,5), which takes the form of a recess with which the ideal external contour of a tool (11, 12, 13, 14, 15) engages, and whose geometry is such that the tool (11, 12, 13, 14, 15) selected for the machining is on the basis of its external contour recognizable by means of the guide feature (4,5), the guide feature (4,5) having a tapering recess corresponding to the ideal external contour of the tapering first tool (13, 14) and that the recess tapers to a diameter which is smaller than the smallest diameter (d1, d2) of the ideal external contour of the second cylindrical tool (11, 12).

3. Blank and several tools for making dental shapes, comprising a blank body (1) made of tooth restoration material, from which the shape can be created by material removal by means of several tools (11, 12, 13, 14, 15) having different external contours, **characterized in that** the blank has at least one guide feature (4,5), which takes the form of a recess with which the ideal external contour of one of the tools (11, 12, 13, 14, 15) engages, and whose geometry is such that the tool (11, 12, 13, 14, 15) selected for the machining is on the basis of its external contour recognizable by means of the guide feature (4,5), the guide feature reproducing the negative shape of one of the tools intended to be used for milling in the tool's ideal state.

4. Blank and several tools according to claim 3, **characterized in that** the recess in the blank takes the form of a drilled hole (5).

5. Blank and several tools according to any of claims 1 to 4, **characterized in that** the guide feature (4,5) is formed such that upon approach of the tool (11, 12, 13, 14, 15) assigned to the guide feature (4,5) the actual state of the dimensions of the assigned tool (11, 12, 13, 14, 15) can be ascertained.

6. Blank and several tools according to any of claims 1 to 5, **characterized in that** the blank includes a holding pin (2, 2a, 2b) for holding and/or positioning the blank body (1) in the machining device and that the guide feature (4,5) is incorporated in the holding pin.

7. Blank and several tools according to any of claims 1 to 6, **characterized in that** at least one guide feature (4,5) is incorporated in the holding pin (2) and/or in the blank body (1) and/or in a reference piece (6).

8. Blank and several tools according to any of claims 1 to 7, **characterized in that** the guide feature (4,5) takes the form of a universal guide feature for the tools (11, 12, 13, 14, 15) which are to be used.

9. Blank and several tools according to any of claims 1 to 8, **characterized in that** several guide features (4,5) are incorporated for the identification of a tool (11, 12, 13, 14, 15).

10. Blank and several tools according to any of claims 1 to 9, **characterized in that** the blank and the various tools are disposed within a cutting machine.

11. Method of making dental shapes from a blank comprising a blank body (1) made of tooth restoration material, from which the entire shape can be machined in a machining device by material removal by means of several tools (11, 12, 13, 14, 15) having different external contours, the external contour of the tool (11, 12, 13, 14, 15) selected for the machining being checked before use by means of a guide feature (4,5) incorporated in the blank, **characterized in that** the guide feature (4,5) takes the form of a recess and that the ideal external contour of the tool and the type of tool are determined from the depth to which the tool penetrates.

## Revendications

1. Ebauche et plusieurs outils pour la fabrication de pièces façonnées dentaires, comprenant un corps (1) d'ébauche en matériau de restauration dentaire, à partir duquel la pièce façonnée peut être usinée par enlèvement de matière au moyen des plusieurs outils (11, 12, 13, 14, 15) présentant un contour externe différent, au moins deux outils (11, 12) étant de forme cylindrique, **caractérisés en ce que** l'ébauche présente au moins un gabarit (4, 5), qui est réalisé sous forme d'évidement, dans lequel s'agrippe le contour externe idéal d'un outil (11, 12, 13, 14, 15) et dont la géométrie est réalisée de manière telle que l'outil (11, 12, 13, 14, 15) choisi pour l'usinage peut être identifié à l'aide de son contour externe au moyen du gabarit (4, 5), le gabarit (4, 5) présentant un évidement (5) correspondant au contour externe idéal du premier outil de forme cylindrique (11) présentant un premier diamètre (d1), dont le diamètre est inférieur à celui du contour externe idéal du deuxième outil de forme cylindrique (12) présentant un deuxième diamètre (d2).

2. Ebauche et plusieurs outils pour la fabrication de pièces façonnées dentaires, comprenant un corps (1) d'ébauche en matériau de restauration dentaire, à partir duquel la pièce façonnée peut être usinée par enlèvement de matière au moyen des plusieurs outils (11, 12, 13, 14, 15) présentant un contour externe différent, au moins un outil présentant un contour externe qui se rétrécit et au moins un outil présentant un contour externe cylindrique, **caractérisés en ce que** l'ébauche présente au moins un gabarit (4, 5), qui est réalisé sous forme d'évidement, dans lequel s'agrippe le contour externe idéal d'un outil (11, 12, 13, 14, 15) et dont la géométrie est réalisée de manière telle que l'outil (11, 12, 13, 14, 15) choisi pour l'usinage peut être reconnu à l'aide de son contour externe au moyen du gabarit (4, 5), le gabarit (4, 5) présentant un évidement qui se rétrécit, correspondant au contour externe idéal du premier outil (13, 14) qui se rétrécit et **en ce que** l'évidement se rétrécit à un diamètre qui est inférieur au plus petit diamètre (d1, d2) du contour externe idéal du deuxième outil cylindrique (11, 12).

3. Ebauche et plusieurs outils pour la fabrication de pièces façonnées dentaires, comprenant un corps (1) d'ébauche en matériau de restauration dentaire, à partir duquel la pièce façonnée peut être usinée par enlèvement de matière au moyen des plusieurs outils (11, 12, 13, 14, 15) présentant un contour externe différent, **caractérisés en ce que** l'ébauche présente au moins un gabarit (4, 5), qui est réalisé sous forme d'évidement, dans lequel s'agrippe le contour externe idéal d'un des outils (11, 12, 13, 14, 15) et dont la géométrie est réalisée de manière telle que l'outil (11, 12, 13, 14, 15) choisi pour l'usinage peut être reconnu à l'aide de son contour externe au moyen du gabarit (4, 5), le gabarit représentant la forme négative d'un des outils prévus pour l'usinage dans son état idéal.

4. Ebauche et plusieurs outils selon la revendication 3, **caractérisés en ce que** l'évidement dans l'ébauche est réalisé sous forme d'alésage (5).

5. Ebauche et plusieurs outils selon une des revendications 1 à 4, **caractérisés en ce que** le gabarit (4, 5) est réalisé de manière telle que lors du démarrage de l'outil (11, 12, 13, 14, 15) associé au gabarit (4, 5), il est possible de définir au niveau du gabarit (4, 5) l'état réel de la dimension de l'outil (11, 12, 13, 14, 15) respectivement associé.

6. Ebauche et plusieurs outils selon une des revendications 1 à 5, **caractérisés en ce que** l'ébauche présente une patte de retenue (2, 2a, 2b) pour la fixation et/ou le positionnement du corps (1) d'ébauche dans le dispositif d'usinage et **en ce que** le gabarit (4, 5) est agencé au niveau de la patte de retenue.

7. Ebauche et plusieurs outils selon une des revendications 1 à 6, **caractérisés en ce qu'**au moins un gabarit (4, 5) est agencé au niveau de la patte de retenue (2) et/ou au niveau du corps (1) d'ébauche et/ou au niveau d'une partie de référence (6).

8. Ebauche et plusieurs outils selon une des revendications 1 à 7, **caractérisés en ce que** le gabarit (4, 5) est réalisé sous forme de gabarit universel pour les outils (11, 12, 13, 14, 15) à utiliser.

9. Ebauche et plusieurs outils selon une des revendications 1 à 8, **caractérisés en ce que** plusieurs gabarits sont agencés (4, 5) pour la détermination d'un outil (11, 12, 13, 14, 15).

10. Ebauche et plusieurs outils selon une des revendications 1 à 9, **caractérisés en ce que** l'ébauche et les plusieurs outils sont placés dans une machine d'usinage.

11. Procédé pour la fabrication de pièces façonnées dentaires à partir d'une ébauche présentant un corps (1) d'ébauche en matériau de restauration dentaire, à partir duquel l'ensemble de la pièce façonnée peut être usiné dans un dispositif d'usinage par enlèvement de matière au moyen de plusieurs outils (11, 12, 13, 14, 15) présentant différents contours externes, l'outil (11, 12, 13, 14, 15) choisi pour l'usinage étant testé en ce qui concerne son contour externe avant son utilisation au moyen d'au moins un gabarit (4, 5) agencé au niveau de l'ébauche, **caractérisé en ce que** le gabarit (4, 5) est réalisé sous forme de cavité et **en ce que** le contour externe idéal de l'outil est déterminé et le type d'outil est spécifié à partir de la profondeur de pénétration de l'outil.
